# EUROPÄISCHE PATENTSCHRIFT

(11) **EP 3 536 148 B1**
(45) Veröffentlichungstag und Bekanntmachung des Hinweises auf die Patenterteilung: **09.09.2020**
(21) Anmeldenummer: 19151475.1
(22) Anmeldetag: 11.01.2019
(51) Int. Cl.: A01K 3/00

(54) **ELEKTRISCHER WEIDEZAUNLEITER, UNEMPFINDLICH GEGEN PFLANZENBEWUCHS, ELEKTRISCHER WEIDEZAUN UND HERSTELLUNGSVERFAHREN FÜR EINEN ELEKTRISCHEN WEIDEZAUNLEITER**
ELECTRICAL FENCE CONDUCTOR, INSENSITIVE TO PLANT CANOPIES, ELECTRIC FENCE CONDUCTOR AND METHOD FOR PRODUCING AN ELECTRIC FENCE CONDUCTOR
CONDUCTEUR DE CLÔTURE ÉLECTRIQUE, NON SENSIBLE AU COUVERT VÉGÉTAL, CLÔTURE ÉLECTRIQUE ET PROCÉDÉ DE FABRICATION D'UN CONDUCTEUR DE CLÔTURE ÉLECTRIQUE

(30) Priorität: 11.01.2018 DE 202018000156 U
(43) Veröffentlichungstag der Anmeldung: 11.09.2019
(73) Patentinhaber: horizont group gmbh, 34497 Korbach (DE)
(72) Erfinder: Seemann, Berthold W., 21271 Hanstedt (DE)
(74) Vertreter: Fuchs Patentanwälte Partnerschaft mbB

(56) Entgegenhaltungen:
- WO-A1-2009/054781
- DE-A1- 19 848 266
- DE-B- 1 192 448
- DE-U1-202017 003 897
- FR-A1- 2 474 276

## Beschreibung

### Bezugnahme auf frühere Anmeldungen

Diese Patentanmeldung beansprucht die Priorität der deutschen Gebrauchsmusteranmeldung Nr. 20 2018 000 156.2.

### Gebiet der Erfindung

Die Erfindung liegt auf dem Gebiet elektrisch betriebener Zäune, bei deren Berührung ein elektrischer Schlag ausgeteilt wird.

Solche Elektrozäune werden insbesondere im Bereich der Hütetechnik zum Einhegen von Weiden oder Tiergehegen eingesetzt. Weitere typische Anwendungen liegen im Bereich des Ernteschutzes bzw. der Wildabwehr.

### Hintergrund der Erfindung

Für die Weidehaltung von Nutztieren auf begrenzten Flächen werden üblicherweise Umzäunungen angebracht, welche die abschreckende Wirkung von Stromschlägen ausnutzen. Dafür wurden verschiedenartige sogenannte Elektrozäune entwickelt. Damit ist man in der Lage, Tiere sowohl innerhalb als auch außerhalb der Weidefläche von der Berührung mit der Umzäunung fernzuhalten.

Je nach Tierart werden solche Elektrozäune mit elektrisch leitenden Bändern ausgeführt, die in unterschiedlichem Abstand voneinander angebracht sind. Ebenfalls werden die Spannung und die Impulsenergie entsprechend der Tierart ausgewählt.

Herkömmliche Elektrozäune sind jedoch mit Mängeln behaftet. Aufwachsende Pflanzen berühren den oder die unteren Leiter, die eine hohe Potenzialdifferenz gegenüber dem Erdreich besitzen und stellen somit einen unerwünschten elektrischen Nebenschluss her. Durch diesen Erdschluss können die Spannung und die Impulsenergie des Elektrozauns soweit reduziert werden, dass die abschreckende Wirkung aufgrund einer entsprechenden Abschwächung des Stromschlags nicht mehr gegeben ist.

Sowohl im Gartenbau als auch in der Landwirtschaft gibt es hinreichend viele Beispiele, wo ein unerwünschter Pflanzenwuchs störend ist. Aus Gründen des Umweltschutzes ist der Einsatz von Bioziden nur in eingeschränktem Maß erlaubt. Manuelle Maßnahmen sind zeitaufwendig und kostspielig, ebenso sind mechanische Barrieren gegen den Pflanzenwuchs teuer und nur selten praktikabel. Auch die Beseitigung der störenden Pflanzen durch Hitze oder mithilfe mechanischer Geräte ist aufwendig und nicht von dauerhafter Wirkung.

Die manuelle oder durch Hilfsgeräte unterstützte Entfernung der störenden Pflanzen ist unvertretbar aufwendig. Ein Einsatz von Pestiziden ist gesetzlich untersagt. Eine Veränderung des Elektrozaunes dergestalt, dass der untere Leiter weggelassen oder höher gesetzt wird, verfehlt jedoch das beabsichtigte Ziel einer Barriere, da Tiere dann die Umzäunung ggf. unterkriechen könnten. Als mögliche Konsequenz könnte dann ein zusätzlicher Unterkriechschutz installiert werden.

Eine Abdeckung des Erdreiches unter dem Elektrozaun könnte den Pflanzenwuchs örtlich begrenzen. Allerdings wäre die akkurate Abdeckung besonders um die Stützpfähle herum äußerst aufwendig, da Gräser selbst feine Zwischenräume durchwachsen können.

Aus der DE 2 316 400 A ist darüber hinaus ein Elektrozaun bekannt, bei dem die aus Metallbändern bestehenden elektrischen Leiter mit Ausnahme ihrer Kantenflächen eine elektrisch isolierende Beschichtung aufweisen, um die Gefahr unerwünschter Erdung durch Pflanzenbewuchs zu verringern. Nachteilig daran ist, dass durch die weitgehende Isolation der Drähte gleichermaßen auch die Kontaktfläche für Tiere reduziert wird und somit die beabsichtigte Hütewirkung beeinträchtigt sein kann.

Schließlich sind aus EP 0 543 621 A1, DE 41 40 628 A1 und DE 43 27 572 C1 jeweils Elektrozaungeräte bekannt, bei denen mithilfe eines Sensors der Belastungszustand des Zaunes ermittelt und starkem Pflanzenbewuchs durch höhere Ladespannung oder höhere Impulsenergien gegengesteuert wird. Nachteilig sind an solchen Systemen der erhöhte technische Mess- und Regelungsaufwand und der mit zunehmendem Pflanzenbewuchs erhöhte Strombedarf.

Ferner offenbart DE 198 48 266 A1 einen elektrischen Weidezaun mit wenigstens einem zwischen einer Mehrzahl von Isolatoren gespannten elektrischen Leiter. Ein parallel zu dem Leiter verlaufendes und in einem Abstand zu dem Leiter angeordnetes Isolierbauteil schirmt den Leiter zumindest teilweise ab. Das Isolierbauteil ist durch eine äußere Kraft derart verform oder verdrängbar, dass der Leiter freigelegt wird.

Es ist daher eine Aufgabe der vorliegenden Erfindung, einen verbesserten elektrischen Weidezaunleiter bzw. einen verbesserten elektrischen Weidezaun anzugeben, welcher insbesondere den Mangel, dass einerseits ein Pflanzenbewuchs nur mit hohem Aufwand beseitigt werden kann und andererseits eine Störung der Funktionssicherheit von Elektrozäunen gegeben ist, zumindest teilweise oder vollständig behebt.

Diese Aufgabe wird durch die Gegenstände der unabhängigen Ansprüche gelöst. Bevorzugte und vorteilhafte Ausgestaltungen sind Gegenstand der abhängigen Ansprüche und der nachstehenden Beschreibung.

### Beschreibung der Erfindung

Die Erfindung betrifft einen elektrischen Weidezaunleiter, der unempfindlich gegen Pflanzenbewuchs ist, und ist in Anspruch 1 und Anspruch 10 definiert. Der elektrische Weidezaunleiter umfasst eine Mehrzahl elektrischer Leiter. Die Unempfindlichkeit gegen Pflanzenbewuchs wird dadurch erreicht, dass die einzelnen elektrischen Leiter (z. B. metallische Drähte) des Weidezaunleiters durch ein Flächenelement mit vektoriell wirkendem elektrischem Widerstand abgedeckt sind. Das Flächenelement ist dabei so ausgelegt und in einem unbelasteten Zustand von den elektrischen Leitern beabstandet, dass sich nur dann ein elektrisch leitfähiger Kontakt zwischen dem Flächenelement und den elektrischen Leitern ausbildet, wenn eine solche Kraft auf das Flächenelement einwirkt, die zu einer Verformung des Flächenelements in Richtung der elektrischen Leiter führt, die eine Berührung des Flächenelements mit den elektrischen Leiter bewirkt. Die Kraft wirkt insbesondere im Wesentlichen senkrecht auf eine von den elektrischen Leitern abgewandte Oberfläche des Flächenelements ein, d.h. in Richtung der Dicke des Flächenelements. Es versteht sich, dass bereits bei einer Berührung des Flächenelements mit nur einem der Mehrzahl elektrischer Leiter ein punktueller leitfähiger Kontakt zustande kommt.

Auf diese Weise wird ein "intelligenter" Weidezaunleiter bereitgestellt, der unterscheiden kann, ob eine Berührung mit einer Pflanze oder mit einem Tier stattfindet. Ermöglicht wird diese Differenzierung mittels des erfindungsgemäßen Flächenelementes mit vektorieller Eigenschaft des elektrischen Widerstandes. Im Sinne der vorliegenden Erfindung weist ein Flächenelement eine vektorielle Charakteristik seines elektrischen Widerstandes auf, wenn sich die elektrischen Widerstandswerte entlang der Längsrichtung (x-Achse), Breite (y-Achse) und Dicke (z-Achse) unterscheiden. Diesbezüglich wird auch auf die nachfolgenden Ausführungsbeispiele verwiesen.

In bevorzugten Ausführungsformen weist das Flächenelement in Richtung der x- und/oder y-Achse, also in Längsrichtung bzw. Breite, einen höheren elektrischen Widerstand als in Richtung der z-Achse, also der Dicke, auf. Dadurch wird auch im unwahrscheinlichen Falle eines punktuellen bzw. lokalen Erdschlusses durch Pflanzenbewuchs eine Ausbreitung des Erdschlusses in x- oder y- Richtung auf benachbarte, das Flächenelement berührende Pflanzen wirksam vermieden. Gleichzeitig bleibt durch den erfindungsgemäß in z-Richtung geringen elektrischen Widerstand des Flächenelements gewährleistet, dass bei einem Tierkontakt die an den Leitern anliegende Hochspannung zuverlässig auf das Tier übertragen werden kann, um diesem einen abschreckenden elektrischen Schlag zu versetzen. Eine Abschwächung des Stromschlags aufgrund von Feinschluss durch an den Flächenelementen anliegende Pflanzen wird indes wegen des in lateraler Richtung sehr hohen Widerstandes des Flächenelementes verhindert.

Vektoriell wirkende elektrische Widerstände können unterschiedlich ausgeführt sein. Vorzugsweise weist das Flächenelement eine im Wesentlichen oder durchgehend wasserundurchlässige Struktur auf, um das Hindurchwachsen einzelner Pflanzenfasern zu verhindern, die sonst gegebenenfalls einen Feinschluss hervorrufen könnten.

Das Flächenelement kann zum Beispiel als eine elektrisch leitende Folie oder Platte ausgebildet sein. Vorzugsweise handelt es sich um eine elektrisch leitfähige Kunststofffolie, die zum Beispiel als Schlauchfolie ausgeführt sein kann. Besonders bevorzugt ist eine elektrisch leitfähige Kunststofffolie auf Graphitbasis, die beispielsweise einen Oberflächenwiderstand im Bereich von R = 10⁵ Ohm bis R = 10⁶ Ohm aufweisen kann. Solche Folien besitzen in der Längsausdehnung und in der Breite einen hohen Widerstand, aber wegen ihrer geringen Materialstärke in der Dicke einen kleinen Widerstandswert.

In bevorzugten Ausführungsformen sind die elektrischen Leiter und das Flächenelement in einem Abstand voneinander angeordnet, welcher so ausgelegt ist, dass bei anliegender Hochspannung an die Leiter und Berührung des Flächenelements durch ein hochohmiges Objekt wie zum Beispiel eine Pflanze kein die Funktion beeinträchtigender Dunkelstrom fließen kann bzw. dass eine Glimmentladung ausgeschlossen ist. Geeignete Abstände bemessen sich insbesondere nach der Höhe der anliegenden Spannung. Bei einer Hochspannung von etwa 4 kV kann der Abstand zwischen den elektrischen Leitern und dem Flächenelement zum Beispiel etwa 1 mm bis 3 mm, vorzugsweise etwa 1,5 mm bis 2,5 mm betragen. Bei einer Hochspannung von etwa 12 kV ist der Abstand zwischen den elektrischen Leitern und dem Flächenelement entsprechend höher zu wählen und kann zum Beispiel etwa 4 mm bis 6 mm, vorzugsweise etwa 4,5 mm bis 5,5 mm betragen. Im Hochspannungsbereich zwischen etwa 4 kV und etwa 12 kV kann der Abstand im Wesentlichen proportional zu den obigen Angaben gewählt werden. Die angegebenen Abstände zwischen etwa 1 mm und 6 mm, insbesondere zwischen etwa 1,5 mm und 5,5 mm stellen Richtwerte dar, die durch gerätespezifische Parameter wie z. B. den Generatorinnenwiderstand verändert werden können. Für den konkreten Einzelfall geeignete Abstände sind für den Fachmann auf der Grundlage dieser Offenbarung ohne Weiteres zu extrapolieren.

Der Weidezaunleiter kann ein Distanzelement aufweisen, welches so angeordnet bzw. im Durchmesser so bemessen ist, dass es zumindest teilweise den vorgenannten Abstand zwischen den elektrischen Leitern und dem Flächenelement ausbildet. Selbstverständlich können auch zwei oder mehrere solcher Distanzelemente vorhanden sein. Eine bevorzugte Ausführungsform sieht vor, dass die elektrischen Leiter zwischen zwei Distanzelementen angeordnet sind, an welchen das Flächenelement anliegt und welche auf diese Weise die elektrischen Leiter entsprechend obiger Angaben von dem Flächenelement beabstanden. Dies kann zum Beispiel dadurch realisiert werden, dass die Distanzelemente einen größeren Durchmesser als die dazwischen liegenden elektrischen Leiter aufweisen, wie auch in den nachfolgenden Ausführungsbeispielen gezeigt wird.

Zweckmäßigerweise ist das Distanzelement länglich und/oder zylinderförmig, insbesondere schlauchförmig, ausgebildet. Dies hat den Vorteil, dass das Distanzelement zusammen mit den elektrischen Leitern in den Weidezaunleiter eingewebt werden kann und auf diese Weise eine einfache und kostengünstige Herstellung erfindungsgemäßer Weidezaunleiter ermöglicht. Das Distanzelement kann zum Beispiel als Kunststofffaden bzw. -kordel, Gummi- oder Kunststoffschlauch ausgebildet sein.

Weitere Merkmale und Vorteile des elektrischen Weidezaunleiters ergeben sich aus den nachfolgenden Ausführungsbeispielen und den Zeichnungen.

Die Erfindung betrifft weiterhin einen elektrischen Weidezaun mit wenigstens einem elektrischen Weidezaunleiter gemäß vorgehender Beschreibung. Es versteht sich, dass ein elektrischer Weidezaun unterschiedliche strukturelle Ausbildungen aufweisen kann. Zu möglichen strukturellen Ausbildungen zählen beispielsweise eine oder mehrere bandförmige Zaunelemente oder Netzanordnungen.

In bevorzugten Ausführungsformen umfasst der elektrische Weidezaun mehrere, im Wesentlichen waagerecht angeordnete erfindungsgemäße elektrische Weidezaunleiter, die vorzugsweise in einer im Wesentlichen senkrecht verlaufenden Richtung elektrisch leitend miteinander verbunden und/oder an einen Pluspol eines Weidezaungenerators angeschlossen sind.

Ein besonderer Vorteil des elektrischen Weidezauns ist, dass der erfindungsgemäße Weidezaunleiter überraschend nah am Boden angeordnet sein kann, ohne die Funktion des Weidezauns zu beeinträchtigen. Es ist zum Beispiel möglich, dass mindestens ein erfindungsgemäßer Weidezaunleiter des elektrischen Weidezauns in einem Abstand von weniger als 20 cm, weniger als 15 cm, weniger als 10 cm oder weniger als 5 cm über einem pflanzenbewachsenen Boden angeordnet ist. Aufgrund der erfindungsgemäßen Ausgestaltung des Weidezaunleiters ist dabei selbst bei starkem Pflanzenbewuchs ein unerwünschter Erdschluss weitgehend ausgeschlossen, sodass die abschreckende Wirkung des Stromschlags bei Tierkontakt gewährleistet bleibt. Im Gegensatz zu herkömmlichen Elektrozäunen bietet der erfindungsgemäße Weidezaun auf diese Weise auch ohne Einsatz weiterer Hilfsmittel einen besonders zuverlässigen Unterkriechschutz.

Gemäß einem weiteren Aspekt betrifft die Erfindung einen elektrischen Weidezaunleiter mit einer Mehrzahl elektrischer Leiter und einem Flächenelement mit vektoriell wirkendem elektrischem Widerstand, wobei das Flächenelement die elektrischen Leiter zumindest zu einer Seite hin abdeckt und in einem unbelasteten Zustand von diesen beabstandet ist, wobei durch eine im Wesentlichen senkrecht auf eine Oberfläche des Flächenelements in Richtung der elektrischen Leiter einwirkende Kraft ein punktueller elektrischer Kontakt zwischen dem Flächenelement und den elektrischen Leitern ausbildbar ist. Mit anderen Worten kann die im Wesentlichen senkrecht auf eine Oberfläche des Flächenelements in Richtung der elektrischen Leiter einwirkende Kraft zu einer Berührung des Flächenelements mit wenigstens einem der elektrischen Leiter führen, wodurch der punktuelle elektrische Kontakt entsteht. Da das Flächenelement einen vektoriell wirkenden elektrischen Widerstand aufweist, wobei der Widerstand in Richtung der Dicke des Flächenelements geringer ist als in den Richtungen der Breite und Höhe des Flächenelements, wird erreicht, dass es im Bereich des punktuellen elektrischen Kontakts nur in Richtung der Dicke (z-Richtung) zu einem Stromfluss bzw. Erdschluss kommt.

Gemäß einem weiteren Aspekt betrifft die Erfindung einen elektrischen Weidezaun, unempfindlich gegen Pflanzenbewuchs, wobei die elektrischen Leiter durch ein Flächenelement mit vektoriell wirkendem elektrischem Widerstand so abgedeckt sind, dass nur dann eine Berührung mit den Leitern zustande kommt, wenn eine Kraft auf das Flächenelement ausgeübt wird.

Vorzugsweise kann das Flächenelement durch eine elektrisch leitende Folie oder Platte ausgebildet sein.

Insbesondere kann ein beliebig gestaltetes Flächenelement verwendet werden, das in x- und/oder y-Richtung einen höheren elektrischen Widerstand besitzt als in z-Richtung.

Schließlich betrifft die Erfindung ein Verfahren zur Herstellung eines elektrischen Weidezaunleiters gemäß obiger Ausführungen. Das Verfahren umfasst die folgenden Schritte: A) Bereitstellen einer Weidezaunleiter-Grundstruktur mit einer Mehrzahl elektrischer Leiter und B) Abdecken der elektrischen Leiter der Weidezaunleiter-Grundstruktur mit mindestens einem Flächenelement mit einem vektoriell wirkenden elektrischen Widerstand. Das Abdecken in Schritt B) erfolgt wie bereits oben beschrieben derart, dass nur dann ein elektrisch leitfähiger Kontakt zwischen dem Flächenelement und den elektrischen Leitern ausbildet wird, wenn eine solche Kraft auf das Flächenelement einwirkt, die zu einer Verformung des Flächenelements in Richtung der elektrischen Leiter führt, die eine Berührung des Flächenelements mit den elektrischen Leitern bewirkt. Die Kraft wirkt insbesondere im Wesentlichen senkrecht auf eine von dem wenigstens einen elektrischen Leiter abgewandte Oberfläche des Flächenelements ein, d.h. in Richtung der Dicke des Flächenelements.

Die Weidezaunleiter-Grundstruktur kann in Schritt A) zum Beispiel in Form eines Gewebebandes bereitgestellt werden, welches die elektrischen Leiter enthält bzw. in welches die elektrischen Leiter eingewebt sind oder eingewebt werden, nachfolgend auch als "Litzenband" bezeichnet. Das Litzenband kann zusätzlich ein oder mehrere Distanzelemente aufweisen, welche dazu ausgelegt sind, beim Abdecken in Schritt B) die elektrischen Leiter von dem Flächenelement zu beabstanden. Das Distanzelement oder die Distanzelemente können in das Litzenband eingewebt sein oder im Rahmen der Bereitstellung der Weidezaunleiter-Grundstruktur in das Litzenband eingewebt werden. So, wie der Begriff hier verwendet wird, beinhaltet "Einweben" oder auch "Verweben", dass das Objekt zwischen einer im Wesentlichen parallel zum Objekt verlaufenden Trägerstruktur, zum Beispiel sogenannten Kettfäden, und einem oder mehreren, das Objekt im Wesentlichen rechtwinklig verkreuzenden, sogenannten Schussfäden angeordnet bzw. fixiert wird.

Das Abdecken in Schritt B) kann auf verschiedene Weisen durchgeführt werden. Eine Möglichkeit ist, dass ein als Folie ausgebildetes Flächenelement schlauchförmig um die Grundstruktur herum angeordnet wird, um die elektrischen Leiter abzudecken. Beispielsweise kann die Folie vollständig um die Grundstruktur herum angeordnet und anschließend zum Beispiel an den beiden Längskanten zum Schlauch verschweißt werden. Selbstverständlich ist es auch möglich, die Folie nur teilweise um die Grundstruktur herum anzuordnen und anschließend zum Beispiel durch Verbinden mit den Distanzelementen zu fixieren. Eine weitere Möglichkeit besteht darin, die Weidezaunleiter-Grundstruktur in ein als Schlauchfolie ausgebildetes Flächenelement einzuführen.

Alternativ oder zusätzlich kann das Flächenelement als Folie ausgebildet sein und in einem, vorzugsweise zusätzlichen, Verfahrensschritt C) mit der Weidezaunleiter-Grundstruktur verwebt werden. Dies hat den Vorteil, dass das Flächenelement schmaler bzw. materialsparender als bei einer schlauchförmigen Ausformung ausgeführt sein kann und eine besonders wirtschaftliche Herstellung des erfindungsgemäßen Weidezaunleiters ermöglicht.

In einer bevorzugten Verfahrensvariante wird hierbei das Flächenelement bzw. die Folie mit Schussfäden verkreuzt, wobei direkt aufeinanderfolgende Schussfäden voneinander einen Abstand von mindestens 5 mm und vorzugsweise mindestens 10 mm aufweisen. Der Erfinder hat erkannt, dass auf diese Weise eine vorteilhafte Flexibilität bzw. Elastizität des eingewebten Flächenelements bzw. der Folie bewahrt wird, die bei Tierberührung eine zuverlässige elektrische Kontaktierung mit den elektrischen Leitern gewährleistet und die Funktionssicherheit des erfindungsgemäßen Weidezaunleiters weiter verbessert.

Vorzugsweise beträgt der Abstand der direkt aufeinanderfolgenden Schussfäden voneinander höchstens 25 mm oder höchstens 20 mm. Dadurch wird eine sichere Fixierung des eingewebten Flächenelements bzw. der Folie erreicht. Besonders bevorzugt liegt der Abstand in einem Bereich von 5 mm bis 20 mm, insbesondere bei etwa 15 mm.

Bevorzugte und vorteilhafte Ausgestaltungen des elektrischen Weidezauns und des Verfahrens zur Herstellung des elektrischen Weidezaunleiters entsprechen im Übrigen, soweit anwendbar, denen des vorgehend beschriebenen elektrischen Weidezaunleiters. Merkmale, die weiter oben und im Folgenden für den elektrischen Weidezaunleiter offenbart sind, können sich daher auch auf den elektrischen Weidezaun bzw. auf das Verfahren zur Herstellung des elektrischen Weidezaunleiters beziehen und umgekehrt.

### Kurzbeschreibung der Figuren

Die Erfindung wird anhand der beigefügten Figuren beispielhaft näher erläutert. Es zeigen:
- Fig. 1: einen schematischen Ausschnitt eines elektrischen Weidezaunes;
- Fig. 2: eine schematische Schnittdarstellung eines erfindungsgemäßen elektrischen Weidezaunleiters;
- Fig. 3: einen schematischen Schnitt durch den in Fig. 2 gezeigten Weidezaunleiter entlang der Achse A;
- Fig. 4: eine schematische Schnittdarstellung des elektrischen Weidezaunleiters aus Fig. 2 bei Berührung durch ein Tier;
- Fig. 5: ein Koordinatensystem in Bezug auf einen schematischen Ausschnitt eines erfindungsgemäßen Flächenelements;
- Fig. 6: eine schematische Schnittdarstellung eines weiteren erfindungsgemäßen elektrischen Weidezaunleiters;
- Fig. 7: einen schematischen Schnitt durch den in Fig. 6 gezeigten Weidezaunleiter entlang der Achse B;
- Fig. 8: eine schematische Schnittdarstellung des elektrischen Weidezaunleiters aus Fig. 6 bei Berührung durch ein Tier;
- Fig. 9: eine Schnittdarstellung einer Vorstufe eines erfindungsgemäßen Weidezaunleiters vor Aufbringung des Flächenelements;
- Fig. 10: eine Draufsicht auf die Vorstufe aus Fig. 9 mit Darstellung der Schussfäden;
- Fig. 11: eine schematische Schnittdarstellung eines weiteren erfindungsgemäßen elektrischen Weidezaunleiters;
- Fig. 12: eine Draufsicht auf den erfindungsgemäßen elektrischen Weidezaunleiter aus Fig. 11 mit teilweise aufliegendem Flächenelement und dessen Einbindung durch zusätzliche Schussfäden;
- Fig. 13: eine schematische Schnittdarstellung des elektrischen Weidezaunleiters aus Fig. 11 bei Berührung durch ein Tier.

### Detaillierte Beschreibung von Ausführungsbeispielen

Gleiche Bezugszeichen in den Figuren deuten auf gleiche oder analoge Elemente hin.

Ausführungsbeispiel 1: Ein Weidezaun besteht in der Regel aus waagrechten Leitern (z. B. Litzenbänder), die in senkrechter Richtung elektrisch leitend miteinander verbunden und an dem Pluspol eines Weidezaungenerators angeschlossen sind, der eine impulsartige Hochspannung von zum Beispiel 5 kV bereitstellt. Der Minuspol des Weidezaungenerators ist mit einem Erdspieß verbunden. Die generelle Anordnung wird bereits mehrfach verwendet und ist nicht Gegenstand der Erfindung.

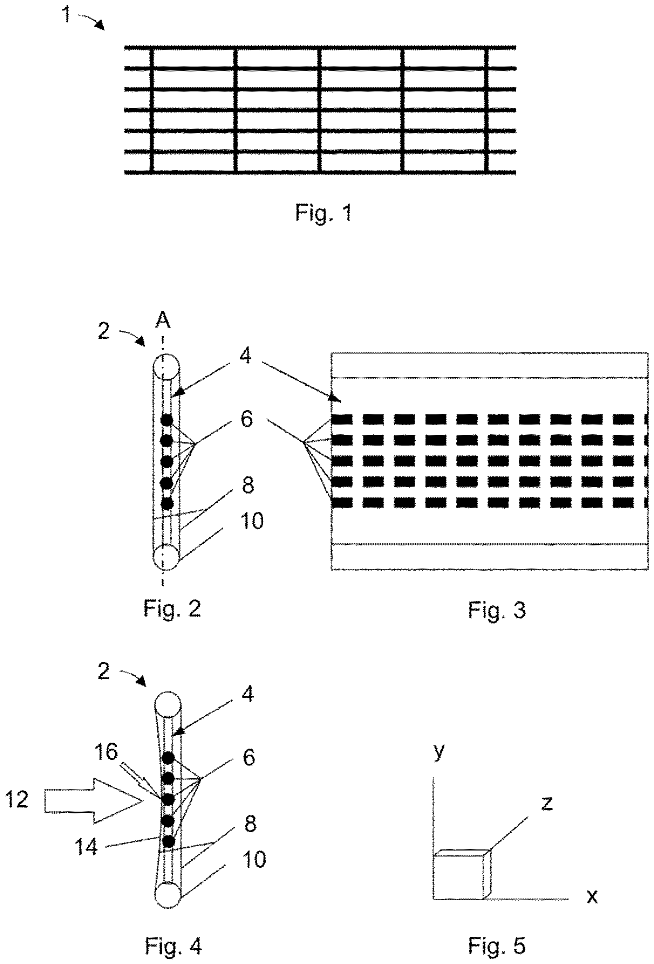

Einen Ausschnitt dieses Netzes eines beispielhaften Weidezauns 1 zeigt Fig. 1. Die waagerechten Weidezaunleiter bzw. Litzenbänder können alle den gleichen Aufbau haben und sind im Schnitt durch einen erfindungsgemäßen Weidezaunleiter 2 in Fig. 2 dargestellt. In ein netzartiges Band 4 von zum Beispiel 40 mm oder 60 mm Breite, vorzugsweise bestehend aus wetterfestem Material, sind fünf metallische Leiter 6 so eingewebt, dass sie nach beiden Seiten freie Kontaktflächen besitzen. Ebenfalls in das netzartige Band 4 sind oben und unten je ein längliches, vorzugsweise zylinderförmiges Distanzelement 10, zum Beispiel ein Kunststofffaden von etwa 3 mm oder etwa 4 mm Durchmesser eingewebt. In Fig. 3 ist in der seitlichen Ansicht bzw. der Schnittdarstellung entlang der Achse A aus Fig. 2 erkennbar, dass die in das Litzenband 4 eingewebten Leiter 6 nach außen Kontaktflächen freilassen.

In dem erfindungsgemäßen Weidezaunleiter 2 sind weiterhin auf beiden Seiten der so entstandenen Konstruktion (Fig. 2) Flächenelemente 8 aus elektrisch leitender Kunststofffolie angebracht und mit den eingewebten Distanzelementen bzw. Kunststofffäden 10 mechanisch so verbunden, dass ein Hineinwachsen von Pflanzenfasern in das Innere des Litzenbandes 4 bzw. des Weidezaunleiters 2 unterbunden wird. Diese Kunststofffolie ist vorzugsweise als Schlauchfolie ausgeführt.

Das aus elektrisch leitender Kunststofffolie bestehende Flächenelement 8 zeichnet eine vektorielle Charakteristik seines elektrischen Widerstandes aus, was bedeutet, dass sich die Widerstandswerte entlang der x-, y- und z-Achse unterscheiden (vgl. Fig. 5). Erfindungsgemäß und bezogen auf das Flächenelement 8 sind die elektrischen Widerstände in Längsrichtung (x-Achse) und in der Breite (y-Achse) sehr hoch und der Widerstand in der Dicke (z-Achse) sehr klein. Solange sich das Flächenelement 8 im unbelasteten Zustand befindet, ist der Widerstandswert so hoch, dass er auf das System keinen Einfluss ausübt.

Die Wirkungsweise erklärt sich demnach wie folgt (Fig. 4): Im ungestörten Zustand sind beide Seiten des Flächenelementes 8 potentialfrei. Dabei ist das Distanzelement 10 in seinem Durchmesser so bemessen, dass der dadurch festgelegte Abstand zwischen den elektrischen Leitern 6 und dem Flächenelement 8 so groß ist, dass bei anliegender Hochspannung und Berührung durch ein hochohmiges Objekt (Pflanze) kein störender Dunkelstrom fließt.

Berührt eine aufwachsende Pflanze ein Flächenelement 8, so bleibt auch die Pflanze potentialfrei. Dabei wird davon ausgegangen, dass die aufwachsende Pflanze keinen wesentlichen seitlichen Druck auf das Flächenelement 8 bzw. senkrechten Druck auf die Oberfläche des Flächenelements ausübt, um dieses in Richtung der elektrischen Leiter 6 zu verformen und es damit punktuell mit wenigstens einem elektrischen Leiter 6 in Kontakt zu bringen.

Wenn hingegen ein Objekt, Pflanze oder Tier jedoch einen solchen Druck 12 ausübt, dass das belastete Flächenelement 14 in z-Richtung gegen einen oder mehrere Leiter 6 gedrückt wird und damit einen elektrischen Kontakt 16 herstellt, erhält dieses einzelne Objekt Hochspannungspotential.

Für den Fall, dass das Objekt eine Pflanze ist, tritt folgende Situation ein:
Der elektrische Widerstand einer einzelnen Pflanze ist zu hoch, um einen störenden Erdschluss zu bilden. Es tritt daher keine Funktionsstörung auf. Eine Ausbreitung dieses Erdschlusses auf benachbarte Pflanzen in x- oder y- Richtung, die ebenfalls das Flächenelement 8 berühren ohne es einzudrücken, erfolgt nicht, da der Widerstand erfindungsgemäß in diesen Ausbreitungsrichtungen sehr hoch ist.

Drückt hingegen ein Tier bereits mit einer geringen, in der Regel senkrecht zum Flächenelement 8 wirkenden Kraft 12 auf das Flächenelement 8 (Fig. 4), so wird dieses verformt und gegen einen oder mehrere Leiter 6 gedrückt. Durch den erfindungsgemäß geringen elektrischen Widerstand in z-Richtung wird die an den Leitern 6 anliegende Hochspannung über diesen Druckpunkt 16 auf das Tier übertragen und versetzt diesem einen elektrischen Schlag. Benachbarte, an den Flächenelementen 8 anliegende Pflanzen bilden keinen störenden Feinschluss, da diese wegen des in x- und y- Richtung sehr hohen Widerstandes allenfalls von einem unwesentlich geringen Strom durchflossen werden.

Ausführungsbeispiel 2: Der elektrische Leiter eines Weidezaunnetzes ist in üblicher Weise mit dem Pluspol eines Weidezaungenerators verbunden, wobei dessen Minuspol über einen Erdspieß das Erdpotential schafft.

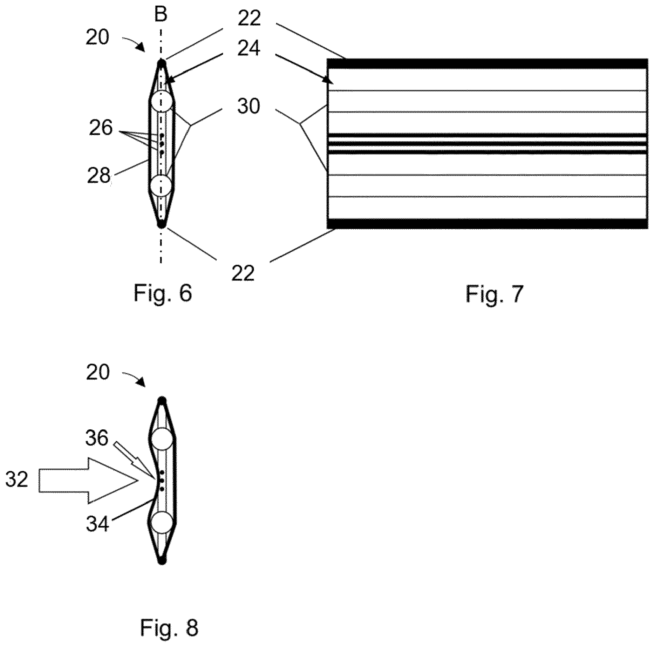

Auch hier wird der vektorielle Widerstand eines Bauelementes ausgenutzt. Aus fertigungstechnischen Gründen ist es gelegentlich schwierig, ein elektrisches Konstrukt in eine Schlauchfolie wie in Ausführungsbeispiel 1 vorgeschlagen einzubringen. Daher wird hier ein anderer Weg vorgeschlagen (Fig. 6), bei dem das Flächenelement direkt mit einem Litzenband verwebt wird.

Ein elektrischer Weidezaunleiter 20 mit einem Litzenband 24 von zum Beispiel 40 mm Breite besitzt an beiden Längskanten einen stabilen Kunststofffaden 22 von zum Beispiel 2 mm Durchmesser und in geringem Abstand zwei weitere Kunststofffäden, Gummi- oder Kunststoffschläuche 30, die als Abstandhalter bzw. Distanzelement dienen und einen Durchmesser von zum Beispiel 5 mm besitzen. In das Litzenband 24 eingewebt ist beidseitig eine Kunststofffolie als Flächenelement 28 von zum Beispiel 40 mm Breite, wobei die Kunststofffäden 22 als Kettfäden dienen. In die Mitte sind drei elektrische Leiter 26 von vorzugsweise 0,3 mm Durchmesser so eingewebt, dass sie beispielsweise bei seitlich wirkendem Druck elektrischen Kontakt mit der Kunststofffolie 28 gestatten. Fig. 7 zeigt einen Schnitt durch den erfindungsgemäßen Weidezaunleiter 20 entlang der Achse B aus Fig. 6.

Die Kunststofffolie 28 ist im unbelasteten Zustand potentialfrei. Bei Berührung mit einem Tier, das eine für die Verformung der Kunststofffolie 28 hinreichende Kraft 32 ausübt, bewirkt die Verformung in z-Richtung (vgl. Fig. 5) einen elektrischen Kontakt 36 zwischen der belasteten Kunststofffolie 34 und den elektrischen Leitern 26, wie in Fig. 8 beispielhaft dargestellt ist. Durch den erfindungsgemäß geringen elektrischen Widerstand in z-Richtung wird die an den Leitern 26 anliegende Hochspannung über diesen Druckpunkt 36 auf das Tier übertragen und versetzt diesem einen elektrischen Schlag. Benachbarte, an den Flächenelementen 28 anliegende Pflanzen bilden keinen störenden Feinschluss, da diese wegen des in x- und y- Richtung sehr hohen Widerstandes von einem unwesentlich geringen Strom durchflossen werden. Bei der Berührung mit einer Pflanze sind die Verhältnisse so, wie bereits im Ausführungsbeispiel 1 dargelegt worden ist.

Ausführungsbeispiel 3: In diesem Ausführungsbeispiel wird ein Herstellungsverfahren für einen erfindungsgemäßen Weidezaunleiter näher erläutert.

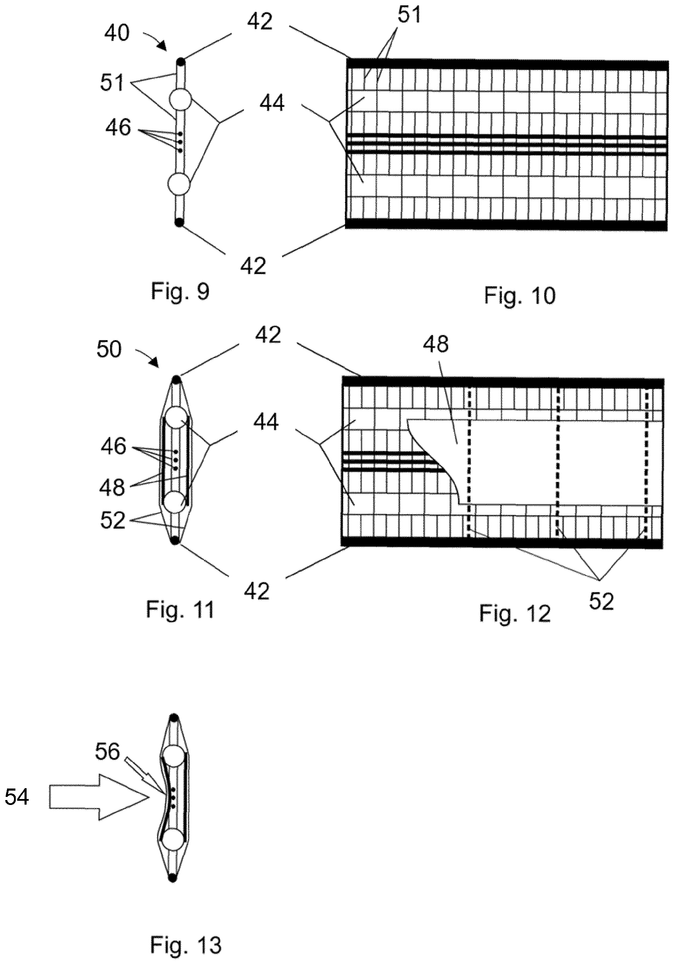

In einem ersten Verfahrensschritt erfolgt die Bereitstellung eines Litzenbandes 40 als Vorstufe bzw. Weidezaunleiter-Grundstruktur für den erfindungsgemäßen Weidezaunleiter 50. Zu diesem Zweck wird zunächst ein netzartiges Band von zum Beispiel 40 mm Breite gewebt. Das resultierende Litzenband 40 ist in den Fig. 9 und Fig. 10 schematisch gezeigt. Es wird gebildet durch mehrere in der Längsrichtung verlaufende Kettfäden und senkrecht dazu angeordneten Schussfäden 51. Mit diesen verwebt sind die Distanzelemente 44 und die vorzugsweise mittig angeordneten metallischen Leiter 46. Die metallischen Leiter 46 sind so eingewebt, dass sie nach beiden Seiten freie Kontaktflächen besitzen. Zur Stabilität sind an beiden Außenkanten Kunststofffäden 42 entsprechender Stärke, vorzugsweise von etwa 2 mm Durchmesser, als Kettfäden eingewebt. Alle vorgenannten Kunststoffelemente bestehen vorzugsweise aus wetterfestem und lichtbeständigem Material. Kettfäden 42 und/oder Schussfäden 51 können zum Beispiel aus Polyethylen bestehen.

In einem zweiten Verfahrensschritt werden auf beiden Seiten des so bereitgestellten Litzenbandes 40 Flächenelemente 48 aus elektrisch leitender Kunststofffolie angebracht (Fig. 11). Die Flächenelemente 48 weisen vorzugsweise eine Breite auf, welche größer als der Abstand der beiden Distanzelemente 44 zueinander ist, sodass sie zweckmäßiger Weise zumindest den Bereich zwischen den Distanzelementen 44 überdecken.

Es ist möglich, dass die beidseitig vorgesehenen Flächenelemente 48 separat in getrennten Arbeitsgängen oder zusammen in einem Arbeitsgang eingewebt werden. Die Fixierung der Flächenelemente 48 erfolgt dabei wie in Fig. 12 dargestellt mit zusätzlichen Schussfäden 52. Mit Vorzug liegt hierbei der Abstand der Schussfäden 52 bei etwa 5 mm bis etwa 20 mm, insbesondere bei etwa 15 mm, da auf diese Weise eine sichere und gleichzeitig flexible Befestigung der Flächenelemente 48 realisiert werden kann. Dies gewährleistet bei Tierberührung 54 eine zuverlässige elektrische Kontaktierung 56 der Flächenelemente 48 mit den elektrischen Leitern 46 (Fig. 13) und verbessert die Funktionssicherheit des erfindungsgemäßen Weidezaunleiters 50 bzw. des Weidezauns insgesamt.

Die Erfindung ist nicht durch die Beschreibung anhand der Ausführungsbeispiele auf diese beschränkt, sondern wird durch den Ansprüchen definiert.

### Bezugszeichenliste

- 1: elektrischer Weidezaun
- 2, 20, 50: elektrischer Weidezaunleiter
- 4, 24, 40: Litzenband
- 6, 26, 46: elektrischer Leiter
- 8, 28, 48: Flächenelement bzw. elektrisch leitende (Kunststoff-) Folie
- 10, 30, 44: Distanzelement bzw. Kunststofffaden, Gummi- oder Kunststoffschlauch
- 12, 32, 54: Druck in z-Richtung
- 14, 34: Flächenelement im belasteten Zustand
- 16, 36, 56: Druck- bzw. Kontaktpunkt
- 22, 42: Kunststoff- bzw. Kettfaden
- 51, 52: Schussfaden

## Patentansprüche

1. Elektrischer Weidezaunleiter (2, 20, 50) mit einer Mehrzahl elektrischer Leiter (6, 26, 46), **dadurch gekennzeichnet, dass** die elektrischen Leiter (6, 26, 46) durch ein in einem unbelasteten Zustand von den elektrischen Leitern (6, 26, 46) beabstandetes Flächenelement (8, 28, 48) mit vektoriell wirkendem elektrischem Widerstand, dessen elektrische Widerstandswerte sich entlang einer Längsrichtung (x-Achse), einer Breite (y-Achse) und einer Dicke (z-Achse) des Flächenelements (8, 28, 48) unterscheiden, so abgedeckt sind, dass sich nur dann ein elektrischer Kontakt zwischen dem Flächenelement (8, 28, 48) und den elektrischen Leitern (6, 26, 46) ausbildet, wenn eine solche Kraft auf das Flächenelement (8, 28, 48) einwirkt, die zu einer Verformung des Flächenelements (8, 28, 48) in Richtung der elektrischen Leiter (6, 26, 46) führt, welche eine Berührung des Flächenelements (8, 28, 48) mit den elektrischen Leitern (6, 26, 46) bewirkt.

2. Elektrischer Weidezaunleiter (2, 20, 50) nach Anspruch 1, **dadurch gekennzeichnet, dass** das Flächenelement (8, 28, 48) als eine elektrisch leitende Folie oder Platte ausgebildet ist.

3. Elektrischer Weidezaunleiter (2, 20, 50) nach Anspruch 1 oder 2, **dadurch gekennzeichnet, dass** das Flächenelement (8, 28, 48) in x- und/oder y-Richtung einen höheren elektrischen Widerstand besitzt als in z-Richtung.

4. Elektrischer Weidezaunleiter (2, 20, 50) nach einem der Ansprüche 1 bis 3, **dadurch gekennzeichnet, dass** die elektrischen Leiter (6, 26, 46) und das Flächenelement (8, 28, 48) in einem Abstand voneinander angeordnet sind, welcher so ausgelegt ist, dass bei anliegender Hochspannung an die Leiter (6, 26, 46) und Berührung des Flächenelements (8, 28, 48) durch eine Pflanze kein die Funktion beeinträchtigender Dunkelstrom fließen kann bzw. eine Glimmentladung ausgeschlossen ist.

5. Elektrischer Weidezaunleiter (2, 20, 50) nach Anspruch 4, **dadurch gekennzeichnet, dass** der Weidezaunleiter ein Distanzelement (10, 30, 44) aufweist, welches dazu ausgelegt ist, zumindest teilweise den Abstand zwischen den elektrischen Leitern (6, 26, 46) und dem Flächenelement (8, 28, 48) einzurichten.

6. Elektrischer Weidezaunleiter (2, 20, 50) nach Anspruch 5, **dadurch gekennzeichnet, dass** das Distanzelement (10, 30, 44) als Gummi- oder Kunststoffschlauch ausgebildet ist.

7. Elektrischer Weidezaunleiter (2, 20, 50) nach einem der Ansprüche 1 bis 6, **dadurch gekennzeichnet, dass** das Flächenelement (8, 28, 48) eine elektrisch leitende Folie auf Graphitbasis umfasst, wobei die Folie vorzugsweise einen Oberflächenwiderstand im Bereich von R = 10⁵ Ohm bis R = 10⁶ Ohm aufweist.

8. Elektrischer Weidezaun (1) mit wenigstens einem elektrischen Weidezaunleiter (2, 20, 50) nach einem der vorhergehenden Ansprüche.

9. Elektrischer Weidezaun (1) nach Anspruch 8, wobei der elektrische Weidezaunleiter (2, 20, 50) in einem Abstand von höchstens 20 cm, vorzugsweise höchstens 15 cm, weiter bevorzugt höchstens 10 cm oder noch weiter bevorzugt höchstens 5 cm über einem pflanzenbewachsenen Boden angeordnet ist.

10. Verfahren zur Herstellung eines elektrischen Weidezaunleiters (2, 20, 50), mit den Schritten
A) Bereitstellen einer Weidezaunleiter-Grundstruktur (4, 24, 40) mit einer Mehrzahl elektrischer Leiter (6, 26, 46),
B) Abdecken der elektrischen Leiter (6, 26, 46) der Weidezaunleiter-Grundstruktur (4, 24, 40) durch mindestens ein Flächenelement (8, 28, 48) mit vektoriell wirkendem elektrischem Widerstand, dessen elektrische Widerstandswerte sich entlang einer Längsrichtung (x-Achse), einer Breite (y-Achse) und einer Dicke (z-Achse) des Flächenelements (8, 28, 48) unterscheiden, derart, dass nur dann ein elektrischer Kontakt zwischen dem Flächenelement (8, 28, 48) und den elektrischen Leitern (6, 26, 46) ausgebildet wird, wenn eine solche Kraft auf das Flächenelement (8, 28, 48) einwirkt, die zu einer Verformung des Flächenelements (8, 28, 48) in Richtung der elektrischen Leiter (6, 26, 46) führt, welche eine Berührung des Flächenelements (8, 28, 48) mit den Leitern (6, 26, 46) bewirkt.

11. Verfahren nach Anspruch 10, **dadurch gekennzeichnet, dass** das Flächenelement (8, 28, 48) als Folie bzw. Schlauchfolie ausgebildet ist und Schritt B) ein schlauchförmiges Anordnen der Folie um die Weidezaunleiter-Grundstruktur (4, 24, 40) oder ein Einführen der Weidezaunleiter-Grundstruktur (4, 24, 40) in die Schlauchfolie umfasst.

12. Verfahren nach Anspruch 10, **dadurch gekennzeichnet, dass** das Flächenelement (38, 28, 48) als Folie ausgebildet ist und das Verfahren zusätzlich den Schritt umfasst: C) Verweben der Folie mit der Weidezaunleiter-Grundstruktur (4, 24, 40).

13. Verfahren nach Anspruch 12, **dadurch gekennzeichnet, dass** das Verweben in Schritt C) ein Verkreuzen der Folie mit Schussfäden (52) umfasst, wobei direkt aufeinanderfolgende Schussfäden (52) voneinander einen Abstand von mindestens 5 mm, vorzugsweise mindestens 10 mm und/oder höchstens 20 mm, vorzugsweise höchstens 15 mm aufweisen.

## Claims

1. Electric pasture fence conductor (2, 20, 50) comprising a plurality of electrical conductors (6, 26, 46), **characterized in that** the electrical conductors (6, 26, 46) are covered by an area element (8, 28, 48) with a vectorial acting electrical resistance, the electrical resistance values of which differ along a longitudinal direction (x-axis), a width (y-axis) and a thickness (z-axis) of the area element (8, 28, 48), wherein the area element is spaced from the electrical conductors (6, 26, 46) in an unloaded state, such that an electrical contact between the area element (8, 28, 48) and the electrical conductors (6, 26, 46) is formed only when such a force acts on the area element (8, 28, 48) that leads to a deformation of the area element (8, 28, 48) in the direction of the electrical conductors (6, 26, 46) which causes the area element (8, 28, 48) to come into contact with the electrical conductors (6, 26, 46).

2. Electric pasture fence conductor (2, 20, 50) according to claim 1, **characterized in that** the area element (8, 28, 48) is formed as an electrically conductive film or plate.

3. Electric pasture fence conductor (2, 20, 50) according to claim 1 or 2, **characterized in that** the area element (8, 28, 48) has a higher electrical resistance in the x and/or y direction than in the z direction.

4. Electric pasture fence conductor (2, 20, 50) according to any one of claims 1 to 3, **characterized in that** the electrical conductors (6, 26, 46) and the area element (8, 28, 48) are arranged at a distance from one another which is designed such that when a high voltage is applied to the conductors (6, 26, 46) and a contact of the area element (8, 28, 48) by a plant occurs, no dark current impairing the function can flow and a glow discharge is impossible.

5. Electric pasture fence conductor (2, 20, 50) according to claim 4, **characterized in that** the pasture fence conductor comprises a spacer element (10, 30, 44) which is designed to at least partially adjust the distance between the electrical conductors (6, 26, 46) and the area element (8, 28, 48).

6. Electric pasture fence conductor (2, 20, 50) according to claim 5, **characterized in that** the spacer element (10, 30, 44) is formed as a rubber or plastic hose.

7. Electric pasture fence conductor (2, 20, 50) according to any one of claims 1 to 6, **characterized in that** the area element (8, 28, 48) comprises an electrically conductive film based on graphite, wherein the film preferably has a surface resistance in the range from R = 10⁵ ohms to R = 10⁶ ohms.

8. Electric pasture fence (1) comprising at least one electric pasture fence conductor (2, 20, 50) according to any one of the preceding claims.

9. Electric pasture fence (1) according to claim 8, wherein the electric pasture fence conductor (2, 20, 50) is arranged at a distance of at most 20 cm, preferably at most 15 cm, more preferably at most 10 cm or even more preferably at most 5 cm above a plant-covered ground.

10. Method for producing an electric pasture fence conductor (2, 20, 50), including the steps
A) providing a pasture fence conductor basic structure (4, 24, 40) comprising a plurality of electrical conductors (6, 26, 46);
B) covering the electrical conductors (6, 26, 46) of the pasture fence conductor basic structure (4, 24, 40) by at least one area element (8, 28, 48) having a vectorially acting electrical resistance, the electrical resistance values of which differ along a longitudinal direction (x-axis), a width (y-axis) and a thickness (z-axis) of the area element (8, 28, 48) such that an electrical contact between the area element (8, 28, 48) and the electrical conductors (6, 26, 46) is formed only when such a force acts on the area element (8, 28, 48) that leads to a deformation of the area element (8, 28, 48) in the direction of the electrical conductors (6, 26, 46), which causes the area element (8, 28, 48) to come into contact with the conductors (6, 26, 46).

11. Method according to claim 10, **characterized in that** the area element (8, 28, 48) is designed as a film or tubular film and step B) comprises a tubular arrangement of the film around the pasture fence conductor basic structure (4, 24, 40) or an insertion of the pasture fence conductor basic structure (4, 24, 40) into the tubular film.

12. Method according to claim 10, **characterized in that** the area element (38, 28, 48) is designed as a film and the method additionally comprises the step: C) weaving the foil with the pasture fence conductor basic structure (4, 24, 40).

13. Method according to claim 12, **characterized in that** the weaving process in step C) comprises a crossing of the film with weft threads (52), wherein directly successive weft threads (52) have a distance of at least 5 mm, preferably at least 10 mm and/or at most 20 mm, preferably at most 15 mm from one another.

## Revendications

1. Fil de clôture électrique (2, 20, 50) muni d'une pluralité de fils électriques (6, 26, 46), **caractérisé en ce que** les fils électriques (6, 26, 46) sont recouverts par un élément de surface (8, 28, 48) espacé des fils électriques (6, 26, 46) à l'état déchargé avec une résistance électrique vectorielle, dont les valeurs de résistance électriques se différencient le long d'une direction longitudinale (axe x), d'une largeur (axe y) et d'une épaisseur (axe z) de l'élément de surface (8, 28, 48), de sorte qu'un contact électrique se réalise uniquement entre l'élément de surface (8, 28, 48) et les fils électriques (6, 26, 46), lorsqu'une telle force agit sur l'élément de surface (8, 28, 48), qui entraîne une déformation de l'élément de surface (8, 28, 48) dans la direction des fils électriques (6, 26, 46), laquelle provoque un contact de l'élément de surface (8, 28, 48) avec les fils électriques (6, 26, 46).

2. Fil de clôture électrique (2, 20, 50) selon la revendication 1, **caractérisé en ce que** l'élément de surface (8, 28, 48) est réalisé en tant qu'une feuille ou plaque électroconductrice.

3. Fil de clôture électrique (2, 20, 50) selon la revendication 1 ou 2, **caractérisé en ce que** l'élément de surface (8, 28, 48) dans la direction x et/ou y possède une résistance électrique plus élevée que dans la direction z.

4. Fil de clôture électrique (2, 20, 50) selon l'une quelconque des revendications 1 à 3, **caractérisé en ce que** les fils électriques (6, 26, 46) et l'élément de surface (8, 28, 48) sont disposés à une distance les uns des autres, laquelle est conçue de telle sorte qu'en cas de haute tension appliquée sur les fils (6, 26, 46) et de contact de l'élément de surface (8, 28, 48) par une plante, aucun courant d'obscurité altérant la fonction ne peut circuler ou une décharge luminescente est exclue.

5. Fil de clôture électrique (2, 20, 50) selon la revendication 4, **caractérisé en ce que** le fil de clôture électrique présente un élément d'espacement (10, 30, 44), lequel est conçu pour créer au moins partiellement la distance entre les fils électriques (6, 26, 46) et l'élément de surface (8, 28, 48).

6. Fil de clôture électrique (2, 20, 50) selon la revendication 5, **caractérisé en ce que** l'élément d'espacement (10, 30, 44) est réalisé en tant que tuyau souple en caoutchouc ou en plastique.

7. Fil de clôture électrique (2, 20, 50) selon l'une quelconque des revendications 1 à 6, **caractérisé en ce que** l'élément de surface (8, 28, 48) comprend une feuille électroconductrice à base de graphite, dans lequel la feuille présente de préférence une résistance de surface dans la plage de R = 10⁵ Ohms à R = 10⁶ Ohms.

8. Clôture électrique (1) munie d'au moins un fil de clôture électrique (2, 20, 50) selon l'une quelconque des revendications précédentes.

9. Clôture électrique (1) selon la revendication 8, dans lequel le fil de clôture électrique (2, 20, 50) est disposé à une distance maximale de 20 cm, de préférence de maximum 15 cm, plus préférentiellement de maximum 10 cm ou encore plus préférentiellement de maximum 5 cm sur un sol couvert de végétaux.

10. Procédé de fabrication d'un fil de clôture électrique (2, 20, 50), avec les étapes de
A) préparation d'une structure de base pour fil de clôture électrique (4, 24, 40) avec une pluralité de fils électriques (6, 26, 46),
B) recouvrement des fils électriques (6, 26, 46) de la structure de base pour fil de clôture électrique (4, 24, 40) par au moins un élément de surface (8, 28, 48) avec une résistance électrique vectorielle, dont les valeurs de résistance électrique se différencient le long d'une direction longitudinale (axe x), d'une largeur (axe y) et d'une épaisseur (axe z) de l'élément de surface (8, 28, 48), de sorte qu'un contact électrique est réalisé uniquement entre l'élément de surface (8, 28, 48) et les fils électriques (6, 26, 46), lorsqu'une telle force agit sur l'élément de surface (8, 28, 48), qui entraîne une déformation de l'élément de surface (8, 28, 48) dans la direction des fils électriques (6, 26, 46), laquelle provoque un contact de l'élément de surface (8, 28, 48) avec les fils (6, 26, 46).

11. Procédé selon la revendication 10, **caractérisé en ce que** l'élément de surface (8, 28, 48) est réalisé en tant que feuille ou feuille tubulaire et l'étape B) comprend une disposition tubulaire de la feuille autour de la structure de base pour fil de clôture électrique (4, 24, 40) ou une introduction de la structure de base pour fil de clôture électrique (4, 24, 40) dans la feuille tubulaire.

12. Procédé selon la revendication 10, **caractérisé en ce que** l'élément de surface (38, 28, 48) est réalisé en tant que feuille et le procédé comprend en plus l'étape de :
C) tissage de la feuille avec la structure de base pour fil de clôture électrique (4, 24, 40).

13. Procédé selon la revendication 12, **caractérisé en ce que** le tissage à l'étape C) comprend un croisement de la feuille avec des fils de trame (52), dans lequel des fils de trame (52) se suivant directement présentent une distance les uns des autres d'au moins 5 mm, de préférence d'au moins 10 mm et/ou de maximum 20 mm, de préférence de maximum 15 mm.
